(19) Europäisches Patentamt
European Patent Office
Office européen des brevets

(11) **EP 2 202 838 B1**

(12) **FASCICULE DE BREVET EUROPEEN**

(45) Date de publication et mention
de la délivrance du brevet:
**17.05.2017 Bulletin 2017/20**

(51) Int Cl.:
**H01P 1/12** *(2006.01)*    **H01G 5/40** *(2006.01)*
**H01G 5/38** *(2006.01)*

(21) Numéro de dépôt: **09179765.4**

(22) Date de dépôt: **17.12.2009**

(54) **Condensateur commuté compact mems**

Kompakt geschalteter MEMS-Kondensator

Compact mems switched capacitor

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **23.12.2008 FR 0807411**

(43) Date de publication de la demande:
**30.06.2010 Bulletin 2010/26**

(73) Titulaire: **Thales**
**92400 Courbevoie (FR)**

(72) Inventeurs:
• **Ziaei, Afshin**
**92170 VANVES (FR)**
• **Le Baillif, Matthieu**
**91400 ORSAY (FR)**
• **Rebernak, William**
**93200 SAINT-DENIS (FR)**
• **Dussauby, Marie-Pierre**
**95320 SAINT LEU LA FORET (FR)**
• **Giraudo, Michel**
**92500 RUEIL MALMAISON (FR)**
• **Neveu, Gilles**
**95110 SANNOIS (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 1 220 256        EP-A2- 1 645 902**
**WO-A-2008/152559      US-A1- 2002 158 717**
**US-A1- 2006 209 491    US-B1- 7 345 866**

• **PARK J Y ET AL: "Monolithically integrated micromachined RF MEMS capacitive switches" SENSORS AND ACTUATORS A, ELSEVIER SEQUOIA S.A., LAUSANNE, CH, vol. 89, no. 1-2, 20 mars 2001 (2001-03-20), pages 88-94, XP004317250 ISSN: 0924-4247**

Remarques:
Le dossier contient des informations techniques présentées postérieurement au dépôt de la demande et ne figurant pas dans le présent fascicule.

## Description

La présente invention concerne un condensateur commuté compact MEMS, selon l'acronyme pour Micro-Electro-Mechanical Systems (systèmes micro-électro-mécaniques). Elle s'applique notamment aux filtres hyperfréquences.

Les condensateurs commutés permettent une meilleure intégration de dispositifs électroniques, notamment des filtres. Par exemple, des condensateurs commutés permettent de reproduire le fonctionnement de résistances, et le recours à des condensateurs commutés permet donc l'intégration dans un encombrement minimum de circuits électroniques à base de résistances. Par exemple, des filtres radiofréquences de type RC peuvent ainsi être réalisés dans des circuits intégrés fabriqués suivant des techniques connues de type circuits intégrés monolithiques hyperfréquences ou MMIC, ou bien circuits intégrés spécialisés ou ASIC. Le document US2006209491 A1 décrit un condensateur variable de type MEMS et un téléphone portable l'incluant. Une autre application des condensateurs commutés peut être envisagée pour obtenir des capacités variables, par exemple pour une utilisation dans des filtres accordables en fréquence, ou bien des déphaseurs, des réseaux reconfigurables ou encore des résonateurs variables. Ces dispositifs sont typiquement utilisés dans des systèmes électroniques d'émetteurs / récepteurs radiofréquences : dans des postes de radiocommunication militaires ou civils, des radars, des faisceaux hertziens, etc. On peut par exemple réaliser une capacité variable par une banque de condensateurs commutés montés en parallèle.

Des structures de capacités variables sont connues de l'état de la technique. Il est notamment possible de réaliser des éléments de capacité variable par des diodes de type Varactor ou Varicap. Des structures à diodes de ces types présentent cependant des inconvénients liés à une linéarité insuffisante, et à des pertes importantes.

Il est encore possible de réaliser des éléments de capacité variable par l'usage de condensateurs commutés par des relais électromécaniques, ou bien par des diodes PIN (Positive Intrinsic Negative), ou encore par des commutateurs de type MEMS. Pour la réalisation de condensateurs commutés intégrés, ce dernier type de commutateur est habituellement préféré, pour des raisons de performances dans les domaines hyperfréquences ; notamment les structures à base de diodes PIN présentent l'inconvénient d'une consommation de courant importante. On réalise ainsi des condensateurs commutés intégrés par exemple par la connexion en série d'un commutateur de type MEMS et d'un condensateur intégré.

Néanmoins cette structure de condensateurs commutés est relativement volumineuse et occupe une place importante dans un circuit intégré. Il est en effet nécessaire de disposer d'une surface de circuit intégré pour le condensateur, à laquelle il faut ajouter la surface pour le commutateur, ainsi que la surface nécessaire pour la ligne de connexion entre le commutateur et le condensateur. En outre dans une telle structure, les pertes hyperfréquences, c'est-à-dire les pertes liées à la désadaptation au niveau des interfaces entre différents éléments, résultent des pertes liées à l'interface entre la ligne d'entrée et le commutateur, au commutateur lui-même, à l'interface avec la ligne qui le relie au condensateur, à l'interface entre la ligne et le condensateur, ainsi qu'au condensateur lui-même. Enfin, les structures connues de filtres accordables en fréquence utilisant des condensateurs commutés à commutateurs de type MEMS présentent une durée de vie limitée liée à la durée de vie du commutateur MEMS.

Un but de la présente invention est de pallier au moins les inconvénients précités, en proposant une nouvelle structure de condensateur commuté, dans laquelle le condensateur à commuter est directement intégré dans la structure du commutateur MEMS radiofréquence.

Un avantage de l'invention est de permettre une réduction de l'encombrement général du condensateur commuté, ainsi qu'une réduction des pertes, et une augmentation de la durée de vie.

Un autre avantage de l'invention est lié à la longévité accrue du condensateur commuté, qui de par sa structure originale, est apte à supporter un nombre de cycles de fonctionnement beaucoup plus important qu'un condensateur commuté connu de l'état de la technique.

La nouvelle structure intégrée objet de cette invention est adaptée aux besoins du système dans lequel elle est intégrée, par exemple un filtre accordable en fréquence.

A cet effet, l'invention a pour objet un condensateur commuté caractérisé en ce qu'il comprend un commutateur de type MEMS série, le commutateur MEMS comprenant une première couche de métal, une couche de matériau diélectrique, une membrane métallique actionnable présentant un état haut et un état bas, la seconde couche de métal étant réalisée sur une partie de la surface de la couche de matériau diélectrique, une coupure de ligne formée par une absence de métal étant réalisée sur au moins la première couche de métal et la seconde couche de métal, au dessous de la membrane métallique actionnable, le condensateur à commuter étant formé par la couche de matériau diélectrique comprise entre les surfaces en regard de la première couche de métal et de la seconde couche de métal, la membrane à l'état bas étant en contact direct avec la seconde couche de métal.

Dans un mode de réalisation de l'invention, le condensateur commuté décrit ci-dessus peut être caractérisé en ce que le commutateur MEMS série est de type commutateur à membrane suspendue, la membrane étant située en-dessus de la coupure de ligne pratiquée à mi-longueur sur toute la largeur et toute l'épaisseur d'au moins la première couche de métal et la seconde couche de métal, la membrane à l'état bas établissant un contact ohmique entre les parties de la seconde couche de métal situées de part et d'autre de la coupure de ligne.

Dans un mode de réalisation de l'invention, le condensateur commuté décrit ci-dessus peut être caractérisé en ce que le commutateur MEMS série est de type à poutre cantilever comprenant une poutre mobile présentant un état haut et un état bas, la poutre mobile étant située en-dessous de la seconde couche de métal, la poutre mobile à l'état bas établissant un contact ohmique avec la seconde couche de métal.

Dans un mode de réalisation de l'invention, le condensateur commuté décrit ci-dessus peut être caractérisé en ce que la valeur de sa capacité est ajustée en fonction de la surface de la seconde couche de métal.

Dans un mode de réalisation de l'invention, une pluralité de condensateurs commutés tels qu'un condensateur commuté décrit ci-dessus, peut être utilisé dans un dispositif à condensateurs commutés.

Dans un mode de réalisation de l'invention, une pluralité de condensateurs commutés tels qu'un condensateur commuté décrit ci-dessus peut être utilisé dans un dispositif à capacité variable, les condensateurs commutés ayant des capacités de valeurs déterminées et étant montés en parallèle.

La présente invention a aussi pour objet un filtre accordable en fréquence comprenant un premier circuit oscillant, un second circuit oscillant et un dispositif de couplage, caractérisé en ce que le premier circuit oscillant et le second circuit oscillant sont accordés respectivement par deux condensateurs d'accord de capacité variable, le dispositif de couplage étant un montage en T de trois condensateurs, comprenant deux condensateurs à capacité fixe sur les deux branches transversale du montage en T, et un condensateur à capacité variable sur la branche du montage en T reliée à la masse, les condensateurs à capacité variable étant des dispositifs à capacité tels que le dispositif à capacité variable décrit ci-dessus.

Dans un mode de réalisation de l'invention, le filtre accordable en fréquence décrit ci-dessus peut être caractérisé en que les premier et second circuits oscillants comprennent un montage en T comprenant une première bobine, une seconde bobine et une troisième bobine, la première et la seconde bobine étant respectivement sur les deux branches transversales du montage en T, la troisième bobine étant sur la branche du montage en T reliée à la masse, un condensateur à capacité fixe étant monté en parallèle avec les première et seconde bobines.

D'autres caractéristiques et avantages de l'invention apparaîtront à la lecture de la description, donnée à titre d'exemple, faite en regard des dessins annexés qui représentent :

- la figure 1, une vue de dessus et une vue en coupe transversale, d'un exemple de condensateur réalisé dans une technologie planaire connue de l'état de la technique ;

- la figure 2a, une vue de dessus d'une structure à condensateur commuté connue de l'état de la technique, associée au schéma électrique équivalent ;

- la figure 2b, une vue de dessus d'une capacité variable réalisée par un montage d'une pluralité de condensateurs commutés connus de l'état de la technique ;

- la figure 3, une vue de dessus et en coupe transversale d'un exemple de structure de commutateur MEMS série à membrane suspendue connue de l'état de la technique ;

- la figure 4a, une vue de dessus et en coupe transversale d'un exemple de condensateur commuté selon l'invention à l'état ouvert, et le schéma électrique équivalent ;

- la figure 4b, une vue en coupe transversale d'un exemple de condensateur commuté selon l'invention à l'état fermé, et le schéma électrique équivalent ;

- la figure 5, une vue de dessus et en coupe transversale de différents exemples de structures de condensateurs commutés selon l'invention ;

- la figure 6, une vue en coupe transversale d'un autre exemple de réalisation d'un condensateur commuté selon l'invention ;

- la figure 7, le schéma électrique d'un exemple de filtre accordable en fréquence à bande passante constante utilisant des condensateurs commutés selon l'invention.

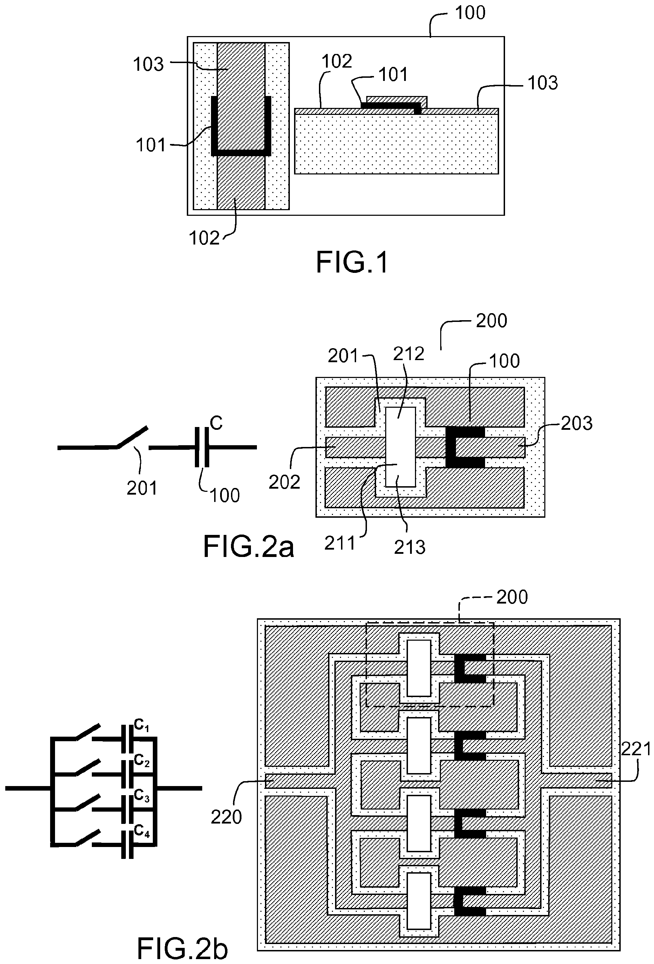

La figure 1 représente, en vue de dessus et en vue en coupe transversale, un exemple de condensateur réalisé dans une technologie planaire connue de l'état de la technique. Un condensateur 100 comprend une première armature métallique 102, une couche de diélectrique 101 et une deuxième armature métallique 103. Une telle structure peut par exemple être réalisée suivant la technique MIM, pour Metal Insulator Metal, en elle-même connue de l'homme du métier.

Il existe d'autres types de condensateurs réalisés en technologie planaire, comme par exemple des structures de type peigne inter-digité, présentant l'avantage d'être fabriquées plus aisément, mais nécessitant une surface d'intégration beaucoup plus importante. Pour cette raison, il est habituellement préféré, pour la réalisation de structure de condensateurs commutés, de recourir à des condensateurs MIM montés en série avec des commutateurs de type MEMS.

La figure 2a présente une vue de dessus d'une structure à condensateur commuté 200 connue de l'état de la technique, ainsi que le schéma électrique équivalent y correspondant.

La structure à condensateur commuté 200 comprend une ligne d'entrée 202, et une ligne de sortie 203. Un commutateur de type MEMS 201 comprend une membrane métallique 211 suspendue sur deux piliers 212 et 213, et actionnée via deux électrodes non représentées sur la figure. Le commutateur 201 est monté en série avec un condensateur de type MIM 100. Le schéma électrique équivalent est celui d'un commutateur 201 en série avec un condensateur 100.

La figure 2b présente une vue de dessus d'une capacité variable réalisée par un montage d'une pluralité de condensateurs commutés 200. La capacité variable comprend une entrée de ligne 220 et une sortie de ligne 221. Une pluralité de condensateurs commutés comprenant chacune un condensateur 100 et un commutateur 201 sont montées en parallèle. Les condensateurs 100 peuvent présenter des capacités de valeurs égales ou bien de valeurs différentes. Les combinaisons d'ouvertures et de fermetures des commutateurs 201 permettent d'obtenir différentes valeurs de la capacité équivalente, dont la valeur égale la somme des capacités offertes par les condensateurs 100 dont le commutateur associé 201 est fermé.

Un tel montage occupe une surface de circuit relativement importante, la surface occupée par un seul condensateur commuté 200 étant égale à la somme des surfaces occupées par le commutateur 201, le condensateur 100, et la ligne d'interconnexion entre ces deux éléments. De surcroît, des pertes hyperfréquences significatives ont pour sources les interfaces entre tous les éléments : l'interface entre l'entrée de ligne 202 et le commutateur 201, entre le commutateur 201 et la ligne d'interconnexion entre le commutateur 201 et le condensateur 100, l'interface entre la ligne d'interconnexion et le condensateur 100, l'interface entre le condensateur 100 et la sortie de ligne 203, le commutateur 201 et le condensateur 100 étant eux-mêmes la source de pertes hyperfréquences.

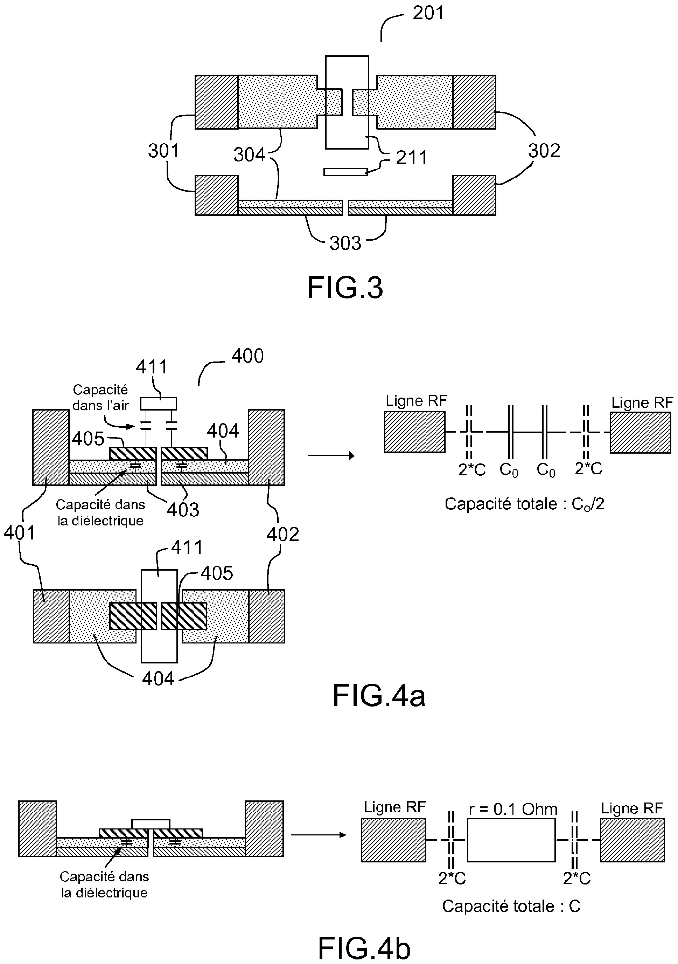

La figure 3 présente une vue de dessus et en coupe transversale d'un exemple de structure de commutateur MEMS 201 série à membrane suspendue connue de l'état de la technique. Le commutateur comprend une ligne d'entrée 301, une ligne de sortie 302. Une couche de métal 303 est couverte d'une couche de diélectrique 304. Les deux couches superposées relient la ligne d'entrée 301 à la ligne de sortie 302, une coupure de ligne RF 306 étant ménagée à mi-longueur, s'étendant sur toute la largeur et l'épaisseur de la couche de métal 303 et de la couche de diélectrique 304, afin qu'aucun signal ne puisse naturellement circuler entre la ligne d'entrée 301 et la ligne de sortie 302. Avantageusement, la de coupure de ligne RF peut n'être réalisée que sur la largeur et l'épaisseur de la couche de métal 303, afin de simplifier le processus de réalisation, dans lequel la couche de diélectrique est communément déposée sur toute la surface de la galette de semi-conducteur ou wafer sur laquelle les commutateurs MEMS sont réalisés. Lorsque le commutateur 201 est en position ouverte ou position haute, la membrane 211, dite à l'état haut, est située à une distance telle de la couche de diélectrique, qu'aucun signal HF ne circule entre la ligne d'entrée et la ligne de sortie. Lorsque le commutateur 201 est en position fermée ou position basse, un couplage capacitif se produit entre la membrane métallique 211 dite à l'état bas, et la couche de métal 303 au travers de la couche de diélectrique 304, de part et d'autre de la coupure de ligne RF 306, ainsi les signaux HF peuvent circuler entre la ligne d'entrée 301 et la ligne de sortie 302.

L'ensemble du commutateur 201, y compris les piliers 212 et 213 et les électrodes d'actionnement de la membrane métallique 211, non représentés sur cette figure, peut être réalisé sur la base d'un unique substrat, et d'opérations successives de lithographie en elles-mêmes connues de l'état de la technique.

La figure 4a présente une vue de dessus et en coupe transversale d'un exemple de condensateur commuté 400 selon l'invention, à l'état ouvert. Le condensateur commuté 400 comprend une ligne d'entrée 401, une ligne de sortie 402, une membrane métallique 411 de type membrane suspendue, dans cette configuration à l'état haut. Une première couche de métal 403 est couverte d'une couche de diélectrique 404. La couche de diélectrique 404 est couverte, sur une partie de sa surface, d'une seconde couche de métal 405 de surface S. Les trois couches 403, 404, 405 ainsi superposées relient la ligne d'entrée 401 à la ligne de sortie 402, une coupure de ligne RF 406 sensiblement verticale étant ménagée à mi-longueur, s'étendant sur toute la largeur et l'épaisseur d'au moins la première couche de métal 403 et la seconde couche de métal 405, afin qu'aucun signal ne puisse naturellement circuler entre la ligne d'entrée 401 et la ligne de sortie 402.

Dans l'ordre de cheminement d'un signal RF circulant entre la ligne d'entrée 401 et la ligne de sortie 402, il existe plusieurs capacités dans les différents milieux diélectriques traversés : une première capacité dans la couche de diélectrique 404, entre la première couche de métal 403 et la seconde couche de métal 405 ; une seconde capacité dans le milieu diélectrique, par exemple l'air, entre la deuxième couche de métal 405 et la membrane métallique 411, une troisième capacité de valeur égale, dans l'air, entre la membrane métallique 411 et la seconde couche de métal 405 en regard, au-delà de la coupure de ligne RF 406, et une quatrième capacité, de valeur égale à la première capacité, au-delà de la coupure de ligne RF 406, dans la couche de diélectrique 404, entre la seconde couche de métal 405 et la première couche de métal 403.

Soit $2*C$ la valeur de la première capacité, égale à la valeur de la quatrième capacité), et $C_O$ la valeur de la deuxième capacité, égale à la valeur de la troisième capacité. Le schéma électrique équivalent du condensateur commuté 400, entre la ligne d'entrée 401 et la ligne de sortie 402, est celui de 4 condensateurs montés en série ayant les valeurs de capacités précitées. La capacité totale $C_{totale}$ de la structure est donnée par la relation suivante :

$$\frac{1}{C_{totale}} = \frac{1}{2*C} + \frac{1}{C_O} + \frac{1}{C_O} + \frac{1}{2*C} \quad (1) \; ;$$

Or, le condensateur commuté 400 peut être dimensionné de manière à ce que la capacité $C_O$ soit très petite en comparaison de la capacité 2*C. De la sorte, il découle de la relation (1) qu'en première approximation, la capacité totale du condensateur commuté 400 est égale à $\dfrac{C_O}{2}$. En pratique, ce sont deux condensateurs de capacité $C_0$ en série qui sont commutés.

La figure 4b présente une vue en coupe transversale d'un exemple condensateur commuté 400 selon l'invention, à l'état fermé.

A l'état fermé, un contact ohmique est produit par la membrane métallique 411 à l'état bas, entre les surfaces de la seconde couche de métal 405, de part et d'autre de la coupure de ligne RF. Ainsi, dans l'ordre de cheminement d'un signal RF circulant entre la ligne d'entrée 401 et la ligne de sortie 402, un premier couplage capacitif est réalisé dans la couche de diélectrique 404, entre la première couche de métal 403 et la seconde couche de métal 405, puis un second couplage capacitif dans la couche de diélectrique 404, entre la seconde couche de métal 405 et la première couche de métal 403. Il est ainsi à noter que c'est la membrane métallique 411 qui assure le rôle de liaison entre les deux parties de ligne de transmission situées de part et d'autre de la coupure de ligne RF. De la même manière, les surfaces métalliques formées par la seconde couche de métal 405 de part et d'autre de la coupure de ligne RF forment des électrodes à commuter, tout ou partie de chacune des surfaces métalliques ainsi formées se situant donc sous la membrane métallique 411. Il est également à noter que le condensateur à commuter est intégré à une structure de type commutateur série, le condensateur à commuter n'étant notamment pas commuté vers la masse du dispositif dans lequel il est intégré.

Le schéma électrique équivalent du condensateur commuté 400, entre la ligne d'entrée 401 et la ligne de sortie 402, est donc celui d'un premier condensateur de capacité 2*C monté en série à une résistance r correspondant à la résistance électrique intrinsèque de la membrane métallique 411, cette résistance ayant typiquement une valeur très faible, de l'ordre de 0,1 Ohm, et à un second condensateur de capacité 2*C. La capacité totale $C_{totale}$ de la structure à l'état fermé est donc égale à C.

La seconde couche de métal 405 peut être aisément réalisée selon les techniques de lithographie connues de l'état de la technique ; la réalisation d'un condensateur commuté 400 selon l'invention représente simplement une étape de métallisation additionnelle, par rapport à la réalisation d'un commutateur de type MEMS 201, en elle-même connue de l'état de la technique.

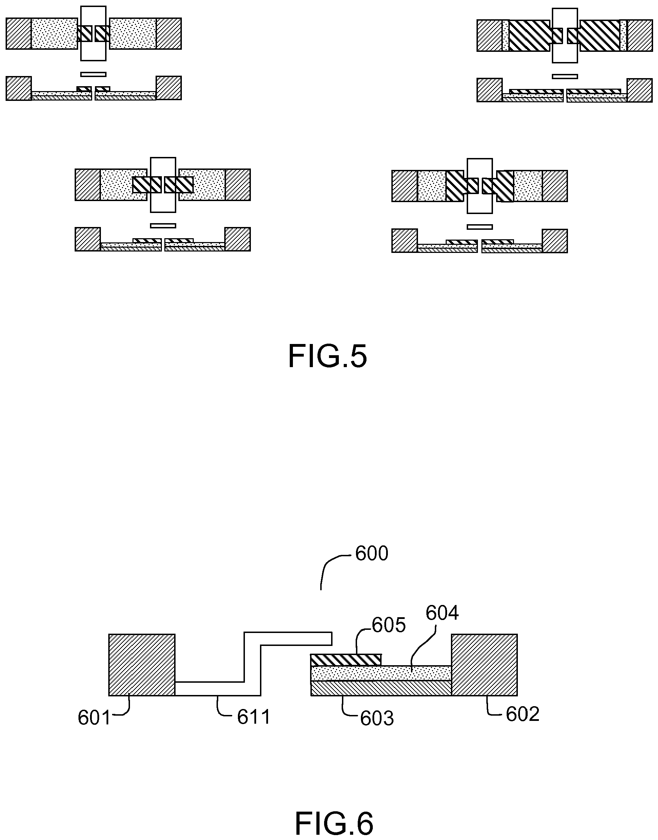

La figure 5 présente une vue de dessus et en coupe transversale de différents exemples de structures de condensateurs commutés selon l'invention.

En ajustant les valeurs des épaisseurs des différentes couches de métal et de diélectrique, et en ajustant la surface S de la deuxième couche de métal 405, il est possible d'obtenir différentes valeurs de la capacité C. Il est bien connu de l'homme du métier que la capacité produite par un milieu diélectrique compris entre deux surfaces métalliques planes en regard, dans la mesure où les effets de bord peuvent être négligés, la surface des électrodes étant très grande par rapport à la distance séparant ces électrodes, est donnée par la relation suivante :

$$C = \frac{\varepsilon_0 \varepsilon_r A}{e},$$

$\varepsilon_0$ étant la permittivité diélectrique du vide,
$\varepsilon_r$ la permittivité relative du diélectrique,
A la surface en regard des électrodes,
E l'épaisseur du diélectrique séparant les deux électrodes.

Il est à noter que l'ajustement de ces paramètres n'influe pas sur la valeur de la capacité équivalente de la structure selon l'invention à l'état ouvert, la capacité $C_O$ étant déterminée par la distance entre la seconde couche de métal 405 et la membrane 411, et par leur surface en regard $S_0$ ; or la surface S de la seconde couche de métal 405 peut être choisie suffisamment grande de manière à ce que $S_0$ soit constante quelle que soit la surface S.

La structure de condensateur commuté 400 selon l'invention offre ainsi un encombrement réduit par rapport aux structures de condensateurs commutés connues de l'état de la technique, le condensateur à commuter étant intégrée dans la structure même du commutateur MEMS la commandant.

Un autre avantage du condensateur commuté 400 selon l'invention est qu'il peut être réalisé sur un substrat unique par des techniques connues de lithographie.

Enfin, la durée de vie d'un condensateur commuté 400 selon l'invention, est supérieure à la durée de vie d'une structure de condensateur commuté comprenant un commutateur MEMS 201 en série avec un condensateur MIM 203 ; cette dernière structure connue de l'état de la technique étant en effet sujette à la durée de vie relativement limitée du commutateur MEMS 201. En effet, il est connu de l'homme du métier qu'un commutateur MEMS 201 est sujet à un phénomène de collage, ou phénomène de chargement, après un certain nombre de cycles d'utilisation, lié à l'accumulation de charges sur la surface de la couche de diélectrique 304. Or la surface de métal 405 de la structure de l'invention, permet aux charges de se libérer, et ainsi réduit fortement le phénomène de chargement, d'un facteur de l'ordre de 1/100 à 1/1000. La durée de vie d'un condensateur commuté 400 selon l'invention n'est donc pas affectée par le phénomène de chargement.

Il est à noter que tous les exemples de réalisation d'un condensateur commuté 400 selon l'invention reposent sur la base d'une structure de commutateur MEMS série 201 de type "membrane suspendue". Une autre structure de commutateur MEMS série, de type à poutre "cantilever", peut tout aussi bien servir de base structurelle à un autre exemple de réalisation d'un condensateur commuté.

La figure 6 présente une vue en coupe transversale d'un autre exemple de réalisation d'un condensateur commuté 600 selon l'invention. Le condensateur commuté 600 comprend une ligne d'entrée 601, une ligne de sortie 602, une première couche de métal 603, couverte d'une couche de diélectrique 604 ; la couche de diélectrique est couverte, sur une partie de sa surface, d'une seconde couche de métal 605. La première couche de métal 603 est connectée électriquement à la ligne de sortie 602. La ligne d'entrée 601 est connectée à une structure métallique 611 comprenant une poutre mobile de type à poutre cantilever.

Suivant des calculs similaires aux calculs présentés plus haut en référence aux figures précédentes, le condensateur commuté 600 présente à l'état ouvert une capacité approximativement égale à $C_O$, soit la capacité dans le milieu diélectrique (typiquement de l'air) compris entre les surfaces en regard de la poutre mobile 611 et de la seconde couche de métal 605.

A l'état fermé, la capacité du condensateur commuté 600 est égale à C, C étant la capacité dans le diélectrique, entre la seconde couche de métal 605 et la première couche de métal 603.

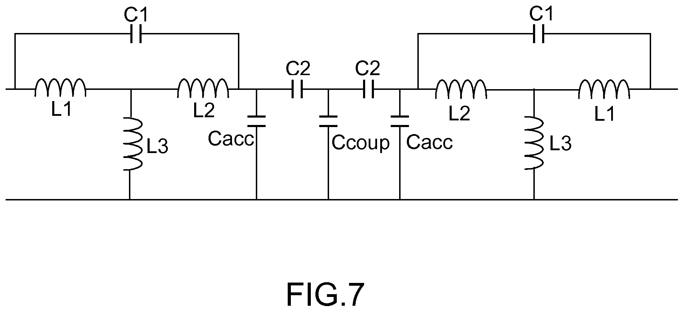

La figure 7 présente le schéma électrique d'un exemple de filtre accordable en fréquence à bande passante constante 700 utilisant des condensateurs commutés selon l'invention.

Le filtre accordable en fréquence 700 comprend un premier circuit oscillant 701 et un second circuit oscillant 702, chacun étant accordé par un condensateur d'accord de capacité $C_{acc}$ et $C'_{acc}$ respectivement. Les deux circuits oscillants 701 et 702 sont couplés par un dispositif de couplage 703.

Le premier circuit oscillant 701 comprend par exemple un montage en T de trois bobines $L_1$, $L_2$ et $L_3$, $L_3$ étant connectée à un potentiel de référence, par exemple un potentiel de masse, et entre les bobines $L_1$ et $L_2$. Un condensateur de capacité fixe $C_1$ est connecté en parallèle des bobines $L_1$ et $L_2$. Le condensateur d'accord $C_{acc}$ est connecté entre la sortie de la bobine $L_2$ et la masse.

Le second circuit oscillant 702 a une structure identique à celle du premier circuit oscillant 701, le condensateur d'accord $C_{acc}$ étant monté en amont du circuit comprenant les bobines $L_1$, $L_2$, $L_3$ et le condensateur $C_1$.

Le dispositif de couplage 703 est par exemple un montage en T de condensateurs, où la branche connectée à la masse comprend un condensateur de capacité $C_{coup}$, connectée en outre à un point entre deux condensateurs de capacité fixe $C_2$.

Les capacités $C_{acc}$, $C'_{acc}$ et $C_{coup}$ peuvent être des capacités variables, obtenues par un montage d'une pluralité de condensateurs commutés 400 ou 600 selon la présente invention. Les capacités $C_{acc}$ et $C_{coup}$ prennent par exemple au minimum 6 valeurs. Le filtre accordable en fréquence 700 peut par exemple fonctionner dans la bande 400-600 MHz et autoriser un pas de fréquence de 12 MHz.

## Revendications

1. Condensateur commuté (400, 600) **caractérisé en ce qu'**il comprend un commutateur de type MEMS série (201), le commutateur MEMS (201) comprenant une première couche de métal (403), une couche de matériau diélectrique (404), une membrane métallique actionnable (411) présentant un état haut et un état bas, <u>une</u> seconde couche de métal (405) étant réalisée sur une partie de la surface de la couche de matériau diélectrique (404), une coupure de ligne (406) formée par une absence de métal étant réalisée sur au moins la première couche de métal (403) et la seconde couche de métal (405), au dessous de la membrane métallique actionnable (411), le condensateur à commuter (400, 600) étant formé par la couche de matériau diélectrique (404) comprise entre les surfaces en regard (S) de la première couche de métal (403) et de la seconde couche de métal (405), **la capacité du condensateur à commuter (400, 600) étant formée par une première capacité en-deçà de la coupure de liane (406) et une quatrième capacité au-delà de la coupure de ligne (406),** la membrane (411) à l'état bas étant en contact direct avec la seconde couche de métal (405).

2. Condensateur commuté (400, 600) selon la revendication 1, **caractérisé en ce que** le commutateur MEMS série (201) est de type commutateur à membrane suspendue (411), la membrane (411) étant située en-dessus de la coupure de ligne (406) pratiquée à mi-longueur sur toute la largeur et toute l'épaisseur d'au moins la première couche de métal (403) et la seconde couche de métal (405), la membrane (411) à l'état bas établissant un contact ohmique entre les parties de la seconde couche de métal (405) situées de part et d'autre de la coupure de ligne (406).

3. Condensateur commuté (400, 600) selon la revendication 1, **caractérisé en ce que** le commutateur MEMS série (201) est de type à poutre cantilever comprenant une poutre mobile (611) présentant un état haut et un état bas, la poutre mobile (611) étant située en-dessus de la seconde couche de métal (405), la poutre mobile (611) à l'état bas établissant un contact ohmique avec la seconde couche de métal (405).

4. Condensateur commuté (400, 600) selon l'une quelconque des revendications précédentes, **caractérisé en ce que** la valeur de capacité est ajustée en fonction de la surface (S) de la seconde couche de métal (405).

5. Utilisation d'une pluralité de condensateurs commutés (400, 600) selon l'une quelconque des revendications précédentes, dans un dispositif à condensateurs commutés.

6. Utilisation d'une pluralité de condensateurs commutés (400, 600) selon l'une quelconque des revendications 1 à 4, dans un dispositif à capacité variable, les condensateurs commutés (400, 600) ayant des capacités de valeurs déterminées et étant montés en parallèle.

7. Filtre accordable en fréquence (700) comprenant un premier circuit oscillant (701), un second circuit oscillant (702) et un dispositif de couplage (703), **caractérisé en ce que** le premier circuit oscillant (701) et le second circuit oscillant (702) sont accordés respectivement par deux condensateurs d'accord de capacité variable ($C_{acc}$, $C'_{acc}$), le dispositif de couplage (703) étant un montage en T de trois condensateurs, comprenant deux condensateurs à capacité fixe ($C_2$) sur les deux branches transversale du montage en T, et un condensateur à capacité variable ($C_{coup}$) sur la branche du montage en T reliée à la masse, les condensateurs à capacité variable ($C_{acc}$, $C'_{acc}$, $C_{coup}$) étant des dispositifs à capacité variable selon la revendication 6.

8. Filtre accordable en fréquence (700) selon la revendication 7, caractérisé en que les premier et second circuits oscillants (701, 702) comprennent un montage en T comprenant une première bobine ($L_1$), une seconde bobine ($L_2$) et une troisième bobine ($L_3$), la première et la seconde bobine ($L_1$, $L_2$) étant respectivement sur les deux branches transversales du montage en T, la troisième bobine ($L_3$) étant sur la branche du montage en T reliée à la masse, un condensateur à capacité fixe ($C_1$) étant monté en parallèle avec les première et seconde bobines ($L_1$, $L_2$).

**Patentansprüche**

1. Geschalteter Kondensator (400, 600), **dadurch gekennzeichnet, dass** er einen Schalter des Typs der MEMS-Serie (201) umfasst, wobei der MEMS-Schalter (201) eine erste Metallschicht (403), eine Schicht aus dielektrischem Material (404), eine betätigbare metallische Membran (411) mit einem hohen Zustand und einem tiefen Zustand umfasst, wobei eine zweite Metallschicht (405) auf einem Teil der Oberfläche der dielektrischen Metallschicht (404) realisiert ist, wobei eine durch eine Metalllücke gebildete Leitungsunterbrechung (406) auf wenigstens der ersten Metallschicht (403) und der zweiten Metallschicht (405) unterhalb der betätigbaren metallischen Membran (411) realisiert ist, wobei der zu schaltende Kondensator (400, 600) durch die dielektrische Materialschicht (404) zwischen den gegenüberliegenden Flächen (S) der ersten Metallschicht (403) und der zweiten Metallschicht (405) gebildet wird, wobei die Kapazität des zu schaltenden Kondensators (400, 600) durch eine erste Kapazität diesseits der Leitungsunterbrechung (406) und eine vierte Kapazität jenseits der Leitungsunterbrechung (406) gebildet wird, wobei die Membran (411) im tiefen Zustand in direktem Kontakt mit der zweiten Metallschicht (405) ist.

2. Geschalteter Kondensator (400, 600) nach Anspruch 1, **dadurch gekennzeichnet, dass** der Schalter der MEMS-Serie (201) vom Schaltertyp mit hängender Membran (411) ist, wobei sich die Membran (411) oberhalb der Leitungsunterbrechung (406) befindet, die in der Hälfte der Länge über die gesamte Breite und die gesamte Dicke von wenigstens der ersten Metallschicht (403) und der zweiten Metallschicht (405) ausgeführt ist, wobei die Membran (411) im tiefen Zustand einen ohmschen Kontakt zwischen den Teilen der zweiten Metallschicht (405) herstellt, die sich auf beiden Seiten der Leitungsunterbrechung (406) befinden.

3. Geschalteter Kondensator (400, 600) nach Anspruch 1, **dadurch gekennzeichnet, dass** der Schalter der MEMS-Serie (201) vom Auslegertyp mit einem mobilen Träger (611) ist, der einen hohen Zustand und einen tiefen Zustand hat, wobei sich der mobile Träger (611) oberhalb der zweiten Metallschicht (405) befindet, wobei der mobile Träger (611) im tiefen Zustand einen ohmschen Kontakt mit der zweiten Metallschicht (405) herstellt.

4. Geschalteter Kondensator (400, 600) nach einem der vorherigen Ansprüche, **dadurch gekennzeichnet, dass** der Kapazitätswert in Abhängigkeit von der Oberfläche (S) der zweiten Metallschicht (405) justiert wird.

**5.** Verwendung einer Mehrzahl von geschalteten Kondensatoren (400, 600) nach einem der vorherigen Ansprüche in einer Vorrichtung mit geschalteten Kondensatoren.

**6.** Verwendung einer Mehrzahl von geschalteten Kondensatoren (400, 600) nach einem der Ansprüche 1 bis 4 in einer Vorrichtung mit variabler Kapazität, wobei die geschalteten Kondensatoren (400, 600) bestimmte Kapazitätswerte haben und parallel montiert sind.

**7.** Filter (700) mit abstimmbarer Frequenz, das eine erste Oszillatorschaltung (701), eine zweite Oszillatorschaltung (702) und eine Kopplungsvorrichtung (703) umfasst, **dadurch gekennzeichnet, dass** die erste Oszillatorschaltung (701) und die zweite Oszillatorschaltung (702) jeweils mit zwei Abstimmkondensatoren von variabler Kapazität ($C_{acc}$, $C'_{acc}$) abgestimmt werden, wobei die Kopplungsvorrichtung (703) eine T-Schaltung von drei Kondensatoren ist, umfassend zwei Kondensatoren mit fester Kapazität ($C_2$) auf den beiden transversalen Zweigen der T-Schaltung und einen Kondensator mit variabler Kapazität ($C_{coup}$) auf dem Zweig der T-Schaltung, der mit der Masse verbunden ist, wobei die Kondensatoren mit variabler Kapazität ($C_{acc}$, $C'_{acc}$, $C_{coup}$) Vorrichtungen mit variabler Kapazität nach Anspruch 6 sind.

**8.** Filter (700) mit abstimmbarer Frequenz nach Anspruch 7, **dadurch gekennzeichnet, dass** die erste und die zweite Oszillatorschaltung (701, 702) eine T-Schaltung umfassen, die eine erste Spule ($L_1$), eine zweite Spule ($L_2$) und eine dritte Spule ($L_3$) umfasst, wobei die erste und die zweite Spule ($L_1$, $L_2$) jeweils auf den beiden transversalen Zweigen der T-Schaltung sind, wobei die dritte Spule ($L_3$) auf dem Zweig der T-Schaltung ist, der mit der Masse verbunden ist, wobei ein Kondensator mit fester Kapazität ($C_1$) parallel mit der ersten und der zweiten Spule ($L_1$, $L_2$) geschaltet ist.

**Claims**

**1.** Switched capacitor (400, 600), **characterized in that** it comprises a series MEMS-type switch (201), the MEMS switch (201) comprising a first metal layer (403), a dielectric material layer (404), an actuatable metallic diaphragm (411) having a high state and a low state, a second metal layer (405) being formed on part of the surface of the dielectric material layer (404), a line disconnection (406) formed by an absence of metal being implemented on at least the first metal layer (403) and the second metal layer (405), below the actuatable metallic diaphragm (411), the capacitor to be switched (400, 600) being formed by the dielectric material layer (404) contained between the mutually confronting surfaces (S) of the first metal layer (403) and of the second metal layer (405), the capacity of the capacitor to be switched (400, 600) being formed by a first capacitance below the line disconnection (406) and a fourth capacitance beyond the line disconnection (406), the diaphragm (411) in the low state being in direct contact with the second metal layer (405).

**2.** Switched capacitor (400, 600) according to Claim 1, **characterized in that** the series MEMS switch (201) is of the type of switch with a suspended diaphragm (411), the diaphragm (411) being located above the line disconnection (406) made at mid-length over the entire width and entire thickness of at least the first metal layer (403) and the second metal layer (405), the diaphragm (411) in the low state making ohmic contact between the parts of the second metal layer (405) which are located on either side of the line disconnection (406).

**3.** Switched capacitor (400, 600) according to Claim 1, **characterized in that** the series MEMS switch (201) is of the type of switch with a cantilever beam, comprising a movable beam (611) having a high state and a low state, the movable beam (611) being located above the second metal layer (405), the movable beam (611) in the low state making ohmic contact with the second metal layer (405).

**4.** Switched capacitor (400, 600) according to any one of the preceding claims, **characterized in that** the capacitance value is set as a function of the area (S) of the second metal layer (405).

**5.** Use of a plurality of switched capacitors (400, 600) according to any one of the preceding claims in a device with switched capacitors.

**6.** Use of a plurality of switched capacitors (400, 600) according to any one of claims 1 to 4 in a variable-capacitance device, the switched capacitors (400, 600) having capacitances of specific values and being connected in parallel.

**7.** Frequency-tunable filter (700) comprising a first oscillating circuit (701), a second oscillating circuit (702) and a coupling device (703), **characterized in that** the first oscillating circuit (701) and the second oscillating circuit (702) are tuned respectively by means of two tuning capacitors of variable capacitance ($C_{acc}$, $C'_{acc}$), the coupling device (703) being a T-connection of three capacitors, comprising two capacitors of fixed capacitance ($C_2$) on the two transverse arms of the T-connection and one variable-capacitance capacitor ($C_{coup}$) on the earthed arm of the T-connection, the variable-capacitance capacitors ($C_{acc}$, $C'_{acc}$, $C_{coup}$) being variable-capacitance devices according to Claim 6.

8. Frequency-tunable filter (700) according to Claim 7, **characterized in that** the first and second oscillating circuits (701, 702) comprise a T-connection comprising a first coil ($L_1$), a second coil ($L_2$) and a third coil ($L_3$), the first and second coils ($L_1$, $L_2$) being respectively on the two transverse arms of the T-connection, the third coil ($L_3$) being on the earthed arm of the T-connection, a fixed-capacitance capacitor ($C_1$) being connected in parallel to the first and second coils ($L_1$, $L_2$).

FIG.1

FIG.2a

FIG.2b

FIG.3

Capacité dans l'air

Capacité dans la diélectrique

Ligne RF

$2*C$   $C_0$   $C_0$   $2*C$

Capacité totale : $C_0/2$

FIG.4a

Capacité dans la diélectrique

Ligne RF   r = 0.1 Ohm   Ligne RF

$2*C$   $2*C$

Capacité totale : $C$

FIG.4b

# FIG.5

# FIG.6

FIG.7

**EP 2 202 838 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006209491 A1